Europäisches Patentamt

European Patent Office

Office européen des brevets

(19)

(11) Veröffentlichungsnummer: **0 054 173**
**A1**

(12) # EUROPÄISCHE PATENTANMELDUNG

(21) Anmeldenummer: **81109347.5**

(22) Anmeldetag: **30.10.81**

(51) Int. Cl.³: **F 16 B 3/00**
**F 16 L 19/06, F 16 L 37/00**

(30) Priorität: **11.12.80 CH 9136/80**

(43) Veröffentlichungstag der Anmeldung:
**23.06.82 Patentblatt 82/25**

(84) Benannte Vertragsstaaten:
**AT CH DE GB IT LI**

(71) Anmelder: **GEORG FISCHER AKTIENGESELLSCHAFT**
**Mühlentalstrasse 105**
**CH-8201 Schaffhausen(CH)**

(72) Erfinder: **Hurter, Fritz**
**Bocksrietstrasse 108**
**CH-8200 Schaffhausen(CH)**

(54) Lösbare Rohrverbindung.

(57) Das in einem Formstück (2) eingesteckte Rohr (1) wird mittels mindestens einem tangential zum Rohrumfang angeordneten, eine Abflachung (9) aufweisenden Bolzen (8) verklemmt. Die Abdichtung erfolgt durch eine in einer Ringnute (4) des Formstückes (2) eingelegte Dichtung (5). Die Verklemmung erfolgt durch axiales Verschieben und Verdrehen des eine kegelstumpfförmige Partie (10) aufweisenden Bolzens (8).

Fig. 1

EP 0 054 173 A1

GEORG FISCHER AKTIENGESELLSCHAFT,     8201 Schaffhausen

2225/FIT / 11.12.1980 / Li-bs /

Lösbare Rohrverbindung

Die Erfindung betrifft eine lösbare Rohrverbindung wie sie im Oberbegriff von Patentanspruch 1 angeführt ist.

Eine Rohrverbindung der eingangs genannten Art ist durch die DE-Patentanmeldung Aktenzeichen V 31 8 87 bekanntgeworden, wobei hier der Fitting als eine, zwei Rohre verbindende Muffe mit einer zwischen den Stirnseiten der Rohre angeordneten Dichtung ausgebildet ist. Die Bolzen sind als mit Keilflächen versehene zweischenklige Bügel ausgebildet, welche gleichzeitig in gegenüberliegenden Bohrungen der Muffe einsteckbar sind und eine beidseitige Verkeilung zwischen Rohr und Muffe erzeugen. Durch schräg auf den Keilflächen verlaufende rippenartige Erhöhungen wird beim Eintreiben der Bügel das Rohr derart axial verschoben, dass es gegen die Dichtung gedrückt wird, was bei zu starkem Eintreiben eine Beschädigung der Dichtung hervorrufen kann. Nachteilig ist ausserdem, dass für jeden unterschiedlichen Rohrdurchmesser mit genauer Distanz der beiden Schenkel gefertigte Bügel erforderlich sind.

Aufgabe der vorliegenden Erfindung ist die Schaffung einer lösbaren Rohrverbindung der eingangs genannten Art, welche auch bei grösseren Toleranzen der Rohraussendurchmesser eine sichere und dichte Verbindung gewährleistet und welche auch für unterschiedliche Rohrdurchmesser eine geringe Anzahl lagerhaltiger
Teile erfordert.

Zur Lösung dieser Aufgabe sind die im Anspruch 1 angeführten
Merkmale vorgesehen.

Bevorzugte Ausführungsformen ergeben sich nach den weiteren
Ansprüchen.

Die Erfindung ist in den beiliegenden Zeichnungen in mehreren
Ausführungsvarianten beispielsweise dargestellt und nachfolgend
beschrieben.

Es zeigen:

Fig. 1       einen Querschnitt einer Rohrverbindung,

Fig. 2       einen Schnitt entlang der Linie II - II von Fig. 1,

Fig. 3       eine Ausführungsvariante des in Fig. 1 gezeigten
             Bolzens,

Fig. 4       einen Querschnitt einer Ausführungsvariante einer
             Rohrverbindung, und

Fig. 5       einen Schnitt entlang der Linie V - V von Fig. 4.

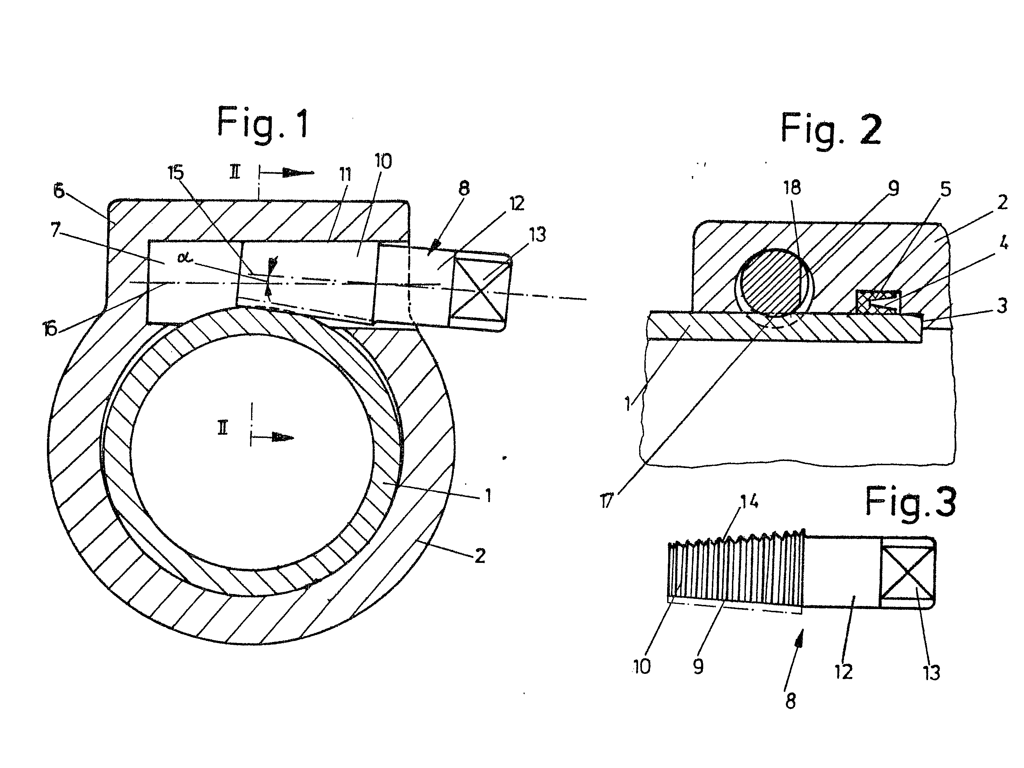

Die Fig. 1 und 2 zeigen eine lösbare Rohrverbindung eines
Rohres 1 mit einem Formstück 2, welches z. B. ein Fitting oder
ein Sprinkler einer Sprinkleranlage sein kann. Der Fitting
kann auch als Winkel, T-Stück oder Muffe ausgebildet sein.
Als axialer Anschlag für das in das Formstück 2 eingeschobene
Rohr 1 dient jeweils ein Bund 3. In einer Ringnute 4 des Formstückes 2 ist eine Dichtung 5 angeordnet, welche in dem gezeigten Ausführungsbeispiel als am Aussendurchmesser des Rohres 1
anliegende Lippendichtungen ausgebildet ist. Diese ermöglicht das Einschieben von unbearbeiteten Rohren ohne deren Beschädigung. Anstelle von Lippendichtungen können auch Rundgummiringe verwendet werden. An jedem Ende des Formstückes 2 sind seitliche Nasen 6 angebracht, welche je eine runde zylindrische Bohrung 7 aufweisen, die in einer zur Rohrachse senkrecht verlaufenden Ebene angeordnet sind. In der Bohrung 7 ist ein Bolzen 8 tangential zum Rohr 1 angeordnet, welcher eine kegelstumpfförmige Partie 10 mit einer Abflachung 9 aufweist.

Die Abflachung 9 verläuft parallel zur Kegelmantellinie 11 und erstreckt sich auf die ganze Länge der kegelstumpfförmigen Partie 10. Der Bolzen 8 ist mit einem aus der Bohrung 7 herausragenden Zapfen 12 versehen, an welchen Schlüsselflächen 13 zum Verdrehen des Bolzens 8 mittels eines Schraubenschlüssels angebracht sind.

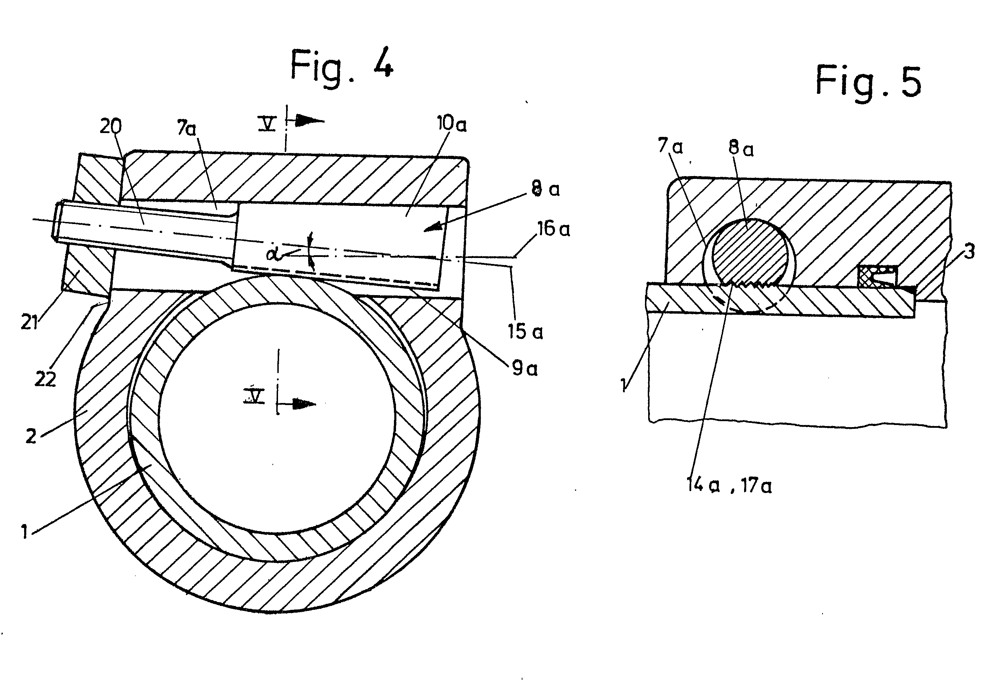

Wie aus Fig. 3 ersichtlich, können an der kegelstumpfförmigen Partie 10 des Bolzens 8 umfangsmässig verlaufende Rillen 14 angeordnet sein, welche vorzugsweise spitz ausgebildet sind. Neben den in Fig. 3 gezeigten parallel angeordneten Rillen 14 können diese auch spiralförmig als Gewinde angeordnet sein.

Nach dem Einstecken des Rohres 1 in das Formstück 2 wird der Bolzen 8 mit zum Rohr 1 gerichteter Abflachung 9 (siehe strichpunktierte Linie in Fig. 1) in die Bohrung 7 gesteckt, bis die Abflachung 9 am Aussendurchmesser des Rohres 1 anliegt. Da sich hierbei die Kegelmantellinie 11 an die Bohrung 7 anlegt, nimmt die Bolzenlängsachse 15 zur Bohrungslängsachse 16 einen Winkel $\alpha$ ein, welcher dem halben Kegenwinkel entspricht und vorzugsweise 2 bis 10$^{\circ}$ beträgt.

Durch anschliessendes Verdrehen des Bolzens 8 entsteht eine Einkerbung 17 am Rohr 1, wodurch dieses im Formstück axial und radial festgehalten wird.

Um das Verdrehen zu Erleichtern kann ein abgerundeter oder spiralförmiger Uebergang 18 von der Abflachung 9 zum Kegel-Mantel angeordnet sein (siehe Fig. 2).

Der mit Rillen 14 bzw. mit Gewinde versehene Bolzen verursacht zusätzliche Einkerbungen an Rohr und Bohrung des Formstücks, wodurch der Halt der Verbindung verstärkt wird.

Die in den Fig. 4 und 5 dargestellte Ausführungsvariante der Rohrverbindung weist ebenfalls einen in einer durchgehenden Bohrung 7a tangential zum Rohr 1 angeordneten Bolzen 8a auf, bei welchem am kleineren Durchmesser der kegelstumpfförmigen Partie 10a ein Gewindebolzen 20 mit einer Mutter 21 angeordnet ist. Die Abflachung 9a verläuft parallel zur Bolzenlängsachse 15a und weist vorzugsweise in Längsrichtung verlaufende spitze Rillen 14a auf. Die Rillen 14a können auch zur Längsachse 15a etwas schräg verlaufen, so dass beim Festziehen des Bolzens 8a mittels der Mutter 21 zusätzlich das Rohr 1 an den Bund 3 des Formstückes 2 gedrückt wird. Beim Festziehen bildet die Bolzenlängsachse 15a zur Bohrungslängsachse 16a wieder einen Winkel $\alpha$, weshalb eine Anlagefläche 22 für die Mutter 21 entsprechend dem Winkel $\alpha$ schräg zur Bohrungslängsachse 16a am Formstück 2 angeordnet ist, bzw. einen rechten Winkel zur Bolzenlängsachse 15a bildet.

Beim Verspannen des Bolzens 8a entstehen durch die Rillen 14a am Rohr Einkerbungen 17a wodurch eine axial- und verdreh-sichere Verbindung zwischen Rohr und Formstück entsteht.

Die Rohrverbindung kann auch mehr als einen Bolzen aufweisen, wobei dann vorzugsweise je zwei Bolzen sich gegenüberliegend tangential am Rohr angeordnet sind.

Die erfindungsgemässe Rohrverbindung ist besonders bei Verwendung von dünnwandigen unbearbeiteten Stahl- bzw. Siedewasserrohren geeignet, welche grössere Massdifferenzen aufweisen und ermöglicht eine lösbare, einfache, dichte und sichere
- insbesonders verdrehsichere - Verbindung dieser Rohre mit
Formteilen wie z.B. Fittings, Armaturen, Hähnen oder Sprinkler.

P a t e n t a n s p r ü c h e

2225/FIT

1. Lösbare Rohrverbindung für in Formstücke, insbesonders Fittings, eingesteckte Rohre mit einer zwischen dem Rohr und dem Formstück eingelegten Dichtung und mit in Bohrungen des Formstücks tangential zum Rohraussendurchmesser angeordneten, eine Verklemmung erzeugenden Bolzen, dadurch gekennzeichnet, dass der Bolzen (8, 8a) eine kegelstumpfförmige Partie (10, 10a) mit einer am Umfang angeordneten Abflachung (9, 9a) aufweist und dass die Bohrungs-Längsachse (16, 16a) und die Bolzenlängsachse (15, 15a) in mit dem Rohr (1) verklemmter Lage des Bolzens (8, 8a) zueinander einen spitzen Winkel ($\alpha$) bilden.

2. Rohrverbindung nach Anspruch 1, dadurch gekennzeichnet, dass die Abflachung (9) parallel zur Kegelmantellinie (11) verläuft und der Bolzen (8) in der Bohrung (7) zwecks Verklemmung verdrehbar ist.

3. Rohrverbindung nach Anspruch 2, dadurch gekennzeichnet, dass der Bolzen (8) an der kegelstumpfförmigen Partie (10) umfangsmässig verlaufende Rillen (14) aufweist.

4. Rohrverbindung nach Anspruch 3, dadurch gekennzeichnet, dass die Rillen (14) alls Gewinde ausgebildet sind.

5. Rohrverbindung nach Anspruch 1, dadurch gekennzeichnet, dass die Abflachung (9a) parallel zur Bolzenlängsachse (15a) angeordnet ist.

6. Rohrverbindung nach Anspruch 2 oder 5, dadurch gekennzeichnet, dass der Bolzen (8a) auf der Seite des kleineren Durchmessers der kegelstumpfförmigen Partie (10a) einen Gewindebolzen (20) mit einer Mutter (21) aufweist, mittels welcher der Bolzen (8a) zwecks Verklemmung axial verschiebbar ist.

7. Rohrverbindung nach Anspruch 6, dadurch gekennzeichnet, dass die Abflachung (9a) in Längsrichtung verlaufende spitze Rillen (14a) aufweist.

8. Rohrverbindung nach Anspruch 6 oder 7, dadurch gekennzeichnet, dass das Formstück (2) an mindestens einem Ende der Bohrung (7a) eine Anlagefläche (21) aufweist, welche rechtwinklig zu der Längsachse (16a) des in der Bohrung (7a) angeordneten Bolzens (8a) verläuft.

# Fig. 1

# Fig. 2

# Fig.3

Fig. 4

Fig. 5

Europäisches
Patentamt

EUROPÄISCHER RECHERCHENBERICHT

0054173

Nummer der Anmeldung

EP 81109347.5

| EINSCHLÄGIGE DOKUMENTE | | | KLASSIFIKATION DER ANMELDUNG (Int Cl³) |
|---|---|---|---|
| Kategorie | Kennzeichnung des Dokuments mit Angabe, soweit erforderlich, der maßgeblichen Teile | betrifft Anspruch | |
| | DE - A1 - 2 757 479 (SVENSKA KRAM AB) <br><br> * Fig. 1-13 * <br><br> -- | 1,3,4 | F 16 B 3/00 <br> F 16 L 19/06 <br> F 16 L 37/00 |
| A | DE - A1 - 2 550 517 (COMPAGNIE MARITIME D'EXPERTISSES S.A.) <br><br> * Fig. 1-3,7 * <br><br> ---- | 1 | |
| | | | **RECHERCHIERTE SACHGEBIETE (Int Cl³)** <br><br> F 16 B 2/00 <br> F 16 B 3/00 <br> F 16 B 7/00 <br> F 16 L 19/00 <br> F 16 L 21/00 <br> F 16 L 25/00 <br> F 16 L 37/00 |
| | | | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| WIEN | 23-02-1982 | SCHUGANICH |

EPA Form 1503.1 06.78